# EUROPÄISCHE PATENTSCHRIFT

(11) **EP 0 867 219 B1**
(45) Veröffentlichungstag und Bekanntmachung des Hinweises auf die Patenterteilung: **05.12.2001**
(21) Anmeldenummer: 97810182.2
(22) Anmeldetag: 26.03.1997
(51) Int. Cl.: B01F 3/04, B67D 1/04

(54) **Vorrichtung zum Karbonisieren einer Flüssigkeit**
Liquid carbonating apparatus
Appareil permettant d'additioner du gaz carbonique à un liquide

(43) Veröffentlichungstag der Anmeldung: 30.09.1998
(73) Patentinhaber: Kisag AG, CH-4512 Bellach (CH)
(72) Erfinder: Brüngger, Urs, 2545 Selzach (CH)
(74) Vertreter: BOVARD AG - Patentanwälte

(56) Entgegenhaltungen:
- EP-B- 0 150 679
- EP-B- 0 172 815
- DE-C- 612 192
- US-A- 4 867 209
- US-A- 4 934 543

## Beschreibung

Die vorliegende Erfindung bezieht sich auf eine Vorrichtung zum Karbonisieren einer Flüssigkeit gemäss dem Oberbegriff des Patentanspruchs 1.

Derartige Vorrichtungen sind bekannt. So zeigt beispielsweise die DE-C-612 192 eine Vorrichtung zum Karbonisieren einer Flüssigkeit, welche einen Behälter umfasst auf welchen ein Adapter aufsetzbar ist, in welchen die Druckgaskapsel eingesetzt werden kann. Das Gas gelangt dann in den Behälter.

Diese Vorrichtung weist den Nachteil auf, dass nach dem Befüllen des Behälters mit Gas ein Überdruck vorhanden ist, der ein Öffnen des Behälters erschwert.

Femer sind Vorrichtungen bekannt, die, wie aus der EP-A-0 172 815 ersichtlich ist, im wesentlichen jeweils aus einem Rahmengestell besteht, in welchem eine Druckgasflasche untergebracht ist. Im Rahmengestell ist ferner ein Aufnahmebereich vorgesehen, in welchen eine Flasche eingesetzt werden kann, die die zu karbonisierende Flüssigkeit enthält. Die Flasche muss danach mit den Zuführelementen für das Gas, die im Rahmengestell angeordnet sind, dichtend in Wirkverbindung gebracht werden. Hierzu sind aufwendige Sicherheitsmechanismen vorgesehen, damit das Gas nur dann in die Flasche mit der zu karbonisierenden Flüssigkeit überführt werden kann, wenn die Flasche richtig eingesetzt und die Dichtheit gewährleistet ist. Aus der Druckgasflasche wird dann Gas in die Flasche mit der zu karbonisierenden Flüssigkeit geleitet, bis ein entsprechendes Ventil anzeigt, dass in der Flasche der vorgesehene Druck erreicht ist. Danach wird der Überdruck in der Flasche abgelassen, die Flasche kann dann aus dem Rahmengestell entfernt werden, nachdem die Verbindung mit den entsprechenden Elementen gelöst ist.

Ebenfalls eine Vorrichtung zur Karbonisierung von Flüssigkeit ist aus der CH-A-622 960 ersichtlich. Auch diese Vorrichtung weist ein Rahmengestell auf, in welchem eine Druckgasflasche gehalten ist. Des weiteren ist ein Vorratsbehälter für Frischwasser vorgesehen, von welchem dieses in eine Kammer geleitet werden kann, in welchem das Wasser karbonisiert wird, wonach dieses dann beispielsweise in ein Glas abgegeben werden kann.

Beide vorgängig beschriebenen Vorrichtungen weisen den Nachteil auf, dass deren Aufbau aufwendig und kompliziert ist, so dass die Anschaffung einer derartigen Vorrichtung zum Karbonisieren einer Flüssigkeit mit relativ hohen Kosten verbunden ist.

Die Aufgabe der Erfindung besteht nun darin, eine Vorrichtung zum Karbonisieren einer Flüssigkeit zu schaffen, die sehr einfach und kostengünstig gestaltet ist, deren Bedienung einfach ist, die ein einfaches Karbonisieren der Flüssigkeit im Behälter ermöglicht und die eine optimale Haltbarkeit des CO2 in der Flüssigkeit gewährleistet.

Erfindungsgemäss erfolgt die Lösung dieser Aufgabe durch die im Patentanspruch 1 angegebenen Merkmale.

Durch das Anbringen eines Kopplungselementes in einem deckelartigen Adapter, der auf den Behälter aufsetzbar ist und der Mittel zum Ablassen des im Behälter nach der Einbringung des Gases auftretenden Überdruckes sowie das Überdruckventil enthält, kann eine kostengünstige und leicht bedienbare Vorrichtung erhalten werden.

In vorteilhafter Weise ist der Adapter mit einem hohlzylindrischen Teil ausgestattet, welcher mit einem Innengewinde versehen ist, so dass dieser sehr einfach auf den flaschenförmigen Behälter, der seinerseits mit einem entsprechenden Aussengewinde ausgestattet ist, aufgeschraubt werden kann.

Eine vorteilhafte Ausgestaltung der Erfindung besteht darin, dass das Kopplungselement aus einem in eine durchgehende Bohrung, die am Körperteil angebracht ist, eingesetzten Ventilstift besteht, der mit den im Anspruch 4 angegebenen Merkmalen ausgestattet ist, wodurch ermöglicht wird, dass auf dieses Kopplungselement eine Druckgaskapsel in einfacher Weise aufgepresst werden kann, wodurch der Ventilstift das entsprechende Ventil der Druckgaskapsel öffnet, so dass das Gas der Druckgaskapsel in den flaschenförmigen Behälter einströmen kann.

In vorteilhafter Weise sind im Adapter die Mittel zum Ablassen des im Behälter nach der Einbringung des Gases auftretenden Überdruckes angebracht, die aus einem Betätigungsknopf bestehen, mit welchem eine Kolbenstange verschiebbar ist, so dass diese aus einer dichtenden Lage in eine Lage gebracht werden kann, in welcher der Überdruck abgebaut werden kann, was eine sehr einfache Handhabung ermöglicht.

Eine weitere vorteilhafte Ausgestaltung der Erfindung besteht darin, dass die Sicherheitseinrichtung zur Vermeidung eines übermässigen Überdruckes im Behälter als Hülse ausgebildet ist, die um die durch den Betätigungsknopf verschiebbaren Kolbenstange angeordnet ist, und gemäss den Merkmalen des Anspruchs 7 als Überdruckventil ausgebildet ist. Mit dieser Lösung wird eine sehr platzsparende Anordnung erreicht, so dass der Adapter in handlicher Form mit geringen Dimensionen gestaltet werden kann.

In vorteilhafter Weise sind das Kopplungselement und die Mittel zum Druckablass mit der entsprechenden Sicherheitseinrichtung im wesentlichen parallel zueinander im Körperteil des Adapters angeordnet. Neben der platzsparenden Anordnung wird dadurch der Vorteil erreicht, dass insbesondere die Sicherheitseinrichtung, aber auch die Einrichtung zum Ablass des Überdruckes beim Befüllen des Behälters mit dem Druckgas wegen der Volumenausdehnung nicht einfriert. Dadurch wird ein sicheres Funktionieren der genannten Teile gewährleistet.

Eine weitere vorteilhafte Ausgestaltung der Erfindung besteht darin, dass der Adapter und der flaschenartige Behälter miteinander verschraubt sind, so dass nach dem Entfernen des Adapters auf das entsprechend am flaschenartigen Behälter angebrachte Gewinde ein Verschlussdeckel aufgeschraubt werden kann. Durch die Ausgestaltung der Mündung der Öffnung des flaschenartigen Behälters und dem Verschlussdeckel gemäss den Merkmalen, wie sie im Patentanspruch 11 beschrieben sind, kann ein luftdichtes Abschliessen des flaschenartigen Behälters erreicht werden, ohne dass zusätzliche Dichtungsmittel eingesetzt werden müssen, was die Reinigung und das sauber halten insbesondere des Verschlussdeckels wesentlich vereinfacht.

Wie bereits erwähnt, werden vorteilhafterweise Druckgaskapseln eingesetzt, deren Gasinhalt im wesentlichen ausreichend ist, um die Flüssigkeitsmenge einer Behälterfüllung zu karbonisieren, was den Vorteil der einfachen Handhabung unterstützt.

Eine Ausführungsform der erfindungsgemässen Vorrichtung zum Karbonisieren einer Flüssigkeit wird nachfolgend anhand der beiliegenden Zeichnung beispielhaft näher erläutert.

Es zeigt
Fig. 1 eine Übersichtsdarstellung der erfindungsgemässen Vorrichtung zum Karbonisieren einer Flüssigkeit, mit im Schnitt dargestelltem Behälter, der die Form einer Flasche aufweist, schematisch dargestelltem aufgesetztem Adapter und einem die Form einer Druckgaskapsel aufweisenden Druckgasbehälter; Fig. 2 eine Schnittdarstellung des Adapters; und
Fig. 3 im Schnitt den oberen Teil der Flasche gemäss Fig. 1, wobei anstelle des Adapters ein die Form eines Verschraubdeckels aufweisender Verschluss aufgesetzt ist.

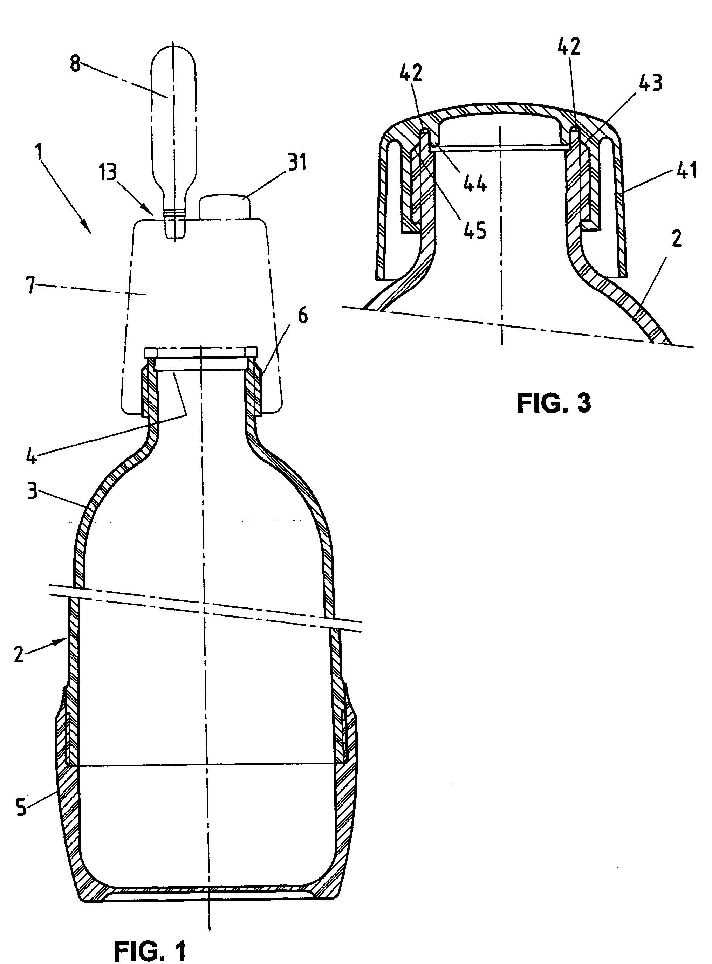

Die erfindungsgemässe Vorrichtung zum Karbonisieren einer Flüssigkeit besteht, wie in Fig. 1 dargestellt ist, aus einem Behälter 2, der die Form einer Flasche aufweist. Diese Flasche 2 setzt sich zusammen aus einem oberen Teil 3, der mit einer Öffnung 4 versehen ist, und einem unteren, den Boden bildenden Teil 5, die in diesem Ausführungsbeispiel miteinander verschraubt und abgedichtet sind.

Im Bereich der Öffnung 4 ist die Flasche 2 mit einem Aussengewinde 6 versehen, auf welches ein schematisch dargestellter Adapter 7 aufgeschraubt ist, der später noch beschrieben wird. Auf diesen Adapter 7 aufgesetzt ist ein Druckgasbehälter 8, der die Form einer Druckgaskapsel aufweist, die beispielsweise bekannt ist aus der CH-A 511 396, und zum Beispiel bei Rahmbläsern verwendet werden kann.

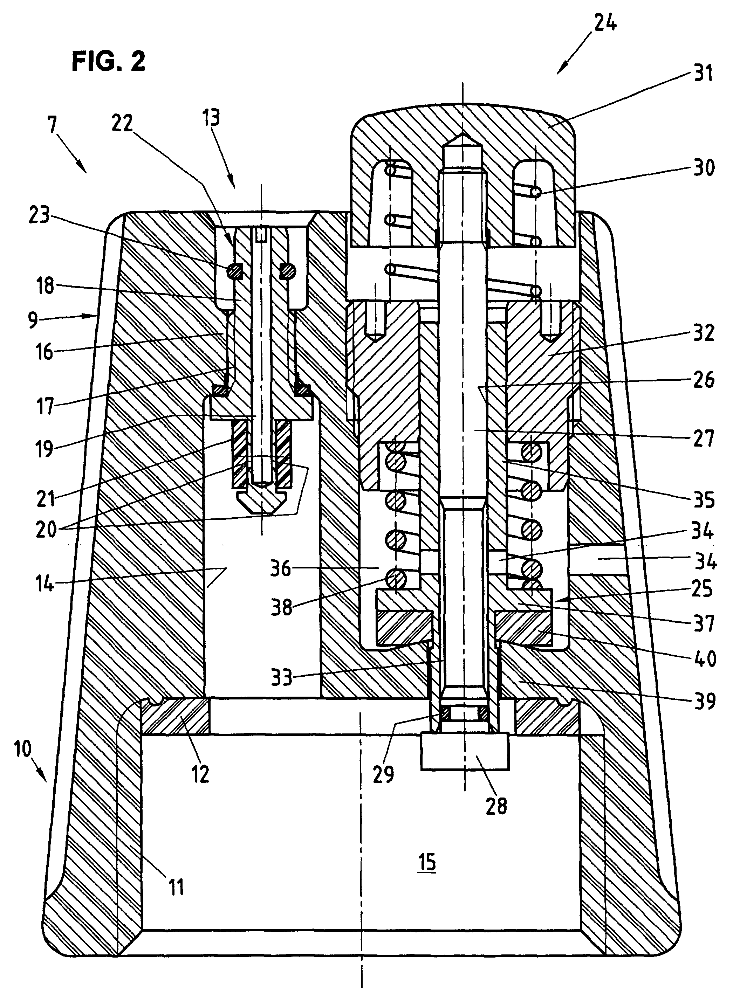

Wie aus Fig. 2 ersichtlich ist, besteht der Adapter 7, der eine deckelartige Form aufweist, aus einem Körperteil 9, an welchen ein hohlzylindrischer Teil 10 anschliesst. An der Innenseite dieses hohlzylindrischen Teiles 10 ist ein Innengewinde 11 angebracht. Dieses Innengewinde 11 entspricht dem Aussengewinde 6, das am Behälter 2 (Fig. 1) angebracht ist, so dass der Adapter 7 auf den Behälter 2 aufschraubbar ist. Innenseitig im hohlzylindrischen Teil 10 des Adapters 7 ist ein Dichtungselement 12 eingelegt.

Im Körperteil 9 des Adapters 7 ist ein Kopplungselement 13 für die Aufnahme des Druckgasbehälters 8 (Fig. 1) angeordnet. Dieses Kopplungselement 13 besteht aus einer Bohrung 14, die den Körperteil 9 des Adapters 7 durchdringt. Diese Bohrung 14 mündet in den Innenraum 15 des hohlzylindrischen Teils 10. Die Bohrung 14 ist mit einer Verengung 16 ausgestattet, die mit einem Gewinde 17 versehen ist. In dieses Gewinde 17 ist ein Ventilstift 18 eingeschraubt.

Dieser Ventilstift 18 ist mit einer Sackbohrung 19 versehen, die gegen die dem hohlzylindrischen Teil 10 abgewandten Seite hin offen ist.

Im gegen den Innenraum 15 gerichteten unteren Bereich des Ventilstiftes 18 sind radial verlaufende Querbohrungen 20 angebracht, die in die Sackbohrung 19 münden. Über den Bereich des Ventilstifts 19 mit den Querbohrungen 20 ist ein aus einem elastischen Material bestehender Dichtungsmantel 21 gestülpt, der die Querbohrungen 20 abdeckt.

Der über die Verengung 16 vorstehende Bereich 22 des Ventilstiftes 18 ist aussenseitig von einem Dichtungsring 23 umgeben.

Die Druckgaskapsel 8 (Fig. 1) ist über diesen vorstehenden Bereich 22 des Ventilstiftes 19 in bekannter Weise stülpbar, wodurch in bekannter Weise der Stift in der Druckgaskapsel einwärts gedrückt wird und das Gas ausströmen kann. Dieses gelangt über die Sackbohrung 19 und die Querbohrungen in den Innenraum der Flasche 2 (Fig. 1), wobei der Dichtungsmantel 21 aufgedrückt wird. Ein Zurückfliessen des Gases ist wegen dem Dichtungsmantel 21 nicht möglich.

Ebenfalls im Körperteil 9 des Adapters 7 sind die Mittel 24 zum Ablassen des im Behälter 2 nach der Einbringung des Gases auftretenden Überdruckes angebracht, sowie die als Überdruckventil 25 ausgestaltete Sicherheitseinrichtung.

Die Mittel 24 zum Ablassen des Überdruckes umfassen eine Durchgangsöffnung 26, in welcher eine in Längsrichtung verschiebbare Kolbenstange 27 gelagert ist. In der in Fig. 2 dargestellten ersten Endlage der Kolbenstange 27, die durch einen Anschlag 28 begrenzt ist, ist die Durchgangsöffnung 26 durch einen um die Kolbenstange 27 gelegten Dichtungsring 29 dicht geschlossen. Die Kolbenstange 27 wird in dieser ersten Endlage durch eine Feder 30 gehalten, die auf einen an der Kolbenstange 27 angebrachten Betätigungsknopf 31 wirkt, und die sich andererseits auf einem als weiterem Anschlag dienenden Einschraubteil 32 abstützt. Durch Druck auf den Betätigungsknopf 31 kann die Kolbenstange 27 gegen den Innenraum 15 hin verschoben werden, bis der Betätigungsknopf 31 auf dem Einschraubteil 32 zur Anlage kommt, wodurch erreicht wird, dass der Dichtungsring 29 aus der Durchgangsöffnung 26 ausfährt, so dass das unter Überdruck stehende Gas durch den zwischen Kolbenstange 27 und Durchlassöffnung 26 entstehende Freiraum 33 und durch die Verbindungsbohrungen 34 abströmen kann.

Die Durchgangsöffnung 26 wird durch eine Hülse 35 gebildet, die in einer erweiterten Ausnehmung 36 im Körperteil 9 in Längsachsenrichtung verschiebbar gehalten ist. Diese Hülse 35 ist mit einer flanschförmigen Verdickung 37 ausgestattet. Diese flanschförmige Verdickung 37 wird mit einer Feder 38, die sich auf dem Einschraubteil 32 abstützt, gegen eine kragenförmige Verengung 39 in der erweiterten Ausnehmung 36 gedrückt. Zwischen flanschförmiger Verdickung 37 und kragenförmiger Verengung 39 ist ein dichtendes Element 40 eingesetzt.

Wenn nun der Druck im Behälter 2 (Fig. 1) und somit im Innenraum 15 zu gross wird, wird die Kolbenstange 27 zusammen mit der Hülse 35 entgegen der Kraft der Feder 38 angehoben, das dichtende Element 40 wird somit von der kragenförmigen Verengung 39 abgehoben, das Gas kann dadurch zwischen kragenförmiger Verengung 39 und Hülse 35 und über die Verbindungsbohrung 34, die im Körperteil 9 angebracht ist, ins Freie abströmen. Dadurch ist gewährleistet, dass im Behälter 2 nie ein zu grosser Überdruck entstehen kann.

Zum Karbonisieren wird in den Behälter 2 Trinkwasser eingefüllt. Dieser Behälter 2 ist beispielsweise für etwa 1,5 Liter Trinkwasser vorgesehen. Dabei muss darauf geachtet werden, dass der Behälter 2 nicht vollständig gefüllt wird, was durch das Anbringen einer Marke am Behälter 2, die die maximale Füllmenge anzeigt, erleichtert werden kann. Dem Trinkwasser können Konzentrate, wie beispielsweise Sirupessenzen zugegeben werden. Danach wird der Adapter 7 auf den Behälter 2 aufgeschraubt. In das Kopplungselement 13 wird die Druckgaskapsel 8, die komprimiertes CO2-Gas enthält, eingesetzt. Die Druckgaskapsel 8 wird dann gegen den Adapter 7 gepresst, das CO2-Gas strömt in den Behälter 2 ein. Die Druckgaskapsel 8 kann vollständig entleert werden, es ist aber auch denkbar, insbesondere wenn die Druckgaskapsel 8 ein selbstschliessendes Ventil aufweist, dass nur ein Teil des darin enthaltenen C02-Gases in den Behälter 2 eingeleitet wird, um eine geringere Karbonisierung des Wassers zu erhalten. Die Druckgaskapsel 8 wird aus dem Kopplungselement 13 entfernt. Der Behälter 2 kann dann gestürzt werden, wodurch eine gute Durchmischung des zu karbonisierenden Wassers und dem eingelassenen CO2-Gas erreicht wird. Bevor der Adapter 7 vom Behälter 2 entfernt werden kann, muss auf den Betätigungsknopf 31 gedrückt werden, wodurch der im Behälter 2 noch herrschende Überdruck abgebaut werden kann. Danach kann der Adapter 7 vom Behälter 2 abgeschraubt werden. Das so hergestellte Getränk kann in eine andere Flasche abgefüllt werden, es kann aber auch im Behälter 2 belassen werden, wozu dieser dicht verschliessbar ist, wie nachfolgend noch beschrieben wird.

Wie aus Fig. 3 ersichtlich ist, kann auf den Behälter 2 ein Verschluss in Form eines Verschraubdeckels 41 aufgeschraubt werden. Dieser Verschraubdeckel 41 weist innenseitig eine ringförmige Kerbe 42 und einen daran anschliessenden kegelstumpfförmigen Bereich 43 auf. Die Mündung der Öffnung 4 des Behälters 2 weist ihrerseits einen ringförmigen Steg 44 und einen daran anschliessenden kegelstumpfförmigen Bereich 45 auf. Im auf den Behälter 2 aufgeschraubten Zustand des Verschraubdeckels 41 dringt der ringförmige Steg 44 in die ringförmige Kerbe 42 ein, während die beiden kegelstumpfförmigen Bereiche 43 bzw. 45 des Verschraubdeckels 41 bzw. der Mündung der Öffnung 4 des Behälters 2 aufeinander zu liegen kommen. Mit dieser Ausgestaltung kann der Behälter 2 durch den aufgeschraubten Verschraubdeckel 41 dicht verschlossen werden, ohne dass zusätzliche Dichtungselemente erforderlich sind. Dieser Verschraubdeckel 41 kann somit einfacher sauber gehalten werden, die Lagerfähigkeit des Wassers, die durch das Karbonisieren verbessert worden ist, wird nicht erneut durch Bakterien limitiert, die sich in einem mit einer zusätzlichen Dichtung versehenen Verschluss ansammeln können.

Durch die vorliegende Erfindung wird eine Vorrichtung zum Karbonisieren einer Flüssigkeit geschaffen, die einen sehr einfachen Aufbau hat, die leicht zu handhaben ist und die sehr kostengünstig auf dem Markt angeboten werden kann.

## Patentansprüche

1. Vorrichtung (1) zum Karbonisieren einer Flüssigkeit, welche einen mit einem Verschluss verschliessbaren Behälter (2), in welchem die zu karbonisierende Flüssigkeit enthalten ist, einen das Gas enthaltenden Druckgasbehälter (8) und einen Adapter (7) zur Aufnahme des Druckgasbehälters (8) umfasst, welcher dichtend mit dem Behälter (2) verbindbar ist und das im Druckgasbehälter (8) enthaltene Druckgas in den Behälter (2) überführbar ist, und in welchem ein Kopplungselement (13), in welches der Druckgasbehälter (8) einsetzbar ist, und eine Sicherheitseinrichtung (25) angeordnet ist, **dadurch gekennzeichnet, dass** im Adapter (7) Mittel (24) zum Ablassen des im Behälter (2) nach der Einbringung des Gases auftretenden Überdruckes angeordnet sind und dass die Sicherheitseinrichtung als Überdruckventil (25) ausgestaltet ist, das im Adapter (7) angebracht ist, mittels welchem der im Behälter entstehende Überdruck beim Befüllen begrenzbar ist.

2. Vorrichtung nach Anspruch 1, **dadurch gekennzeichnet, dass** der Adapter (7) eine deckelartige Form aufweist, die aus einem Körperteil (9) besteht, an welchen ein hohlzylindrischer Teil (10) anschliesst, welcher mit einem Innengewinde (11) versehen ist, das einem am Behälter (2) angebrachten Aussengewinde (6) entspricht, und dass in den hohlzylindrischen Teil (10) ein Dichtungselement (12) eingesetzt ist.

3. Vorrichtung nach Anspruch 2, **dadurch gekennzeichnet, dass** das Kopplungselement (13) eine am Körperteil (9) angebrachte durchgehende Bohrung (14) umfasst, die in den hohlzylindrischen Teil (10) mündet, und die mit einer Verengung (16) versehen ist, die ein Gewinde (17) aufweist, in welches ein Ventilstift (18) eingeschraubt ist.

4. Vorrichtung nach Anspruch 3, **dadurch gekennzeichnet, dass** der Ventilstift (18) eine Sackbohrung (19) aufweist, welche gegen die dem hohlzylindrischen Teil (10) abgewandten Seite hin offen ist, dass im gegen den hohlzylindrischen Teil (10) gerichteten Bereich des Ventilstiftes (18) mindestens eine Querbohrung (20) angebracht ist, die in die Sackbohrung (19) mündet, und dass über den Bereich des Ventilstiftes (18) mit der mindestens einen Querbohrung (20) ein aus einem elastischen Material bestehenden Dichtungsmantel (21) gestülpt ist, der die mindestens eine Querbohrung (20) abdeckt.

5. Vorrichtung nach einem der Ansprüche 1 bis 4, **dadurch gekennzeichnet, dass** die Mittel (24) zum Ablassen des im Behälter (2) nach der Einbringung des Gases auftretenden Überdruckes aus einer weiteren in den Körperteil (9) eingelassenen Durchgangsöffnung (26) und einer darin in Längsrichtung verschiebbaren Kolbenstange (27) zusammengesetzt sind, welche Kolbenstange (27) mit einer Dichtung (29) versehen ist, mittels welcher die Durchgangsöffnung (26) in einer ersten Endlage der Kolbenstange (27) dicht verschlossen ist, während in einer zweiten Endlage die Durchgangsöffnung (26) geöffnet ist.

6. Vorrichtung nach Anspruch 5, **dadurch gekennzeichnet, dass** die erste Endlage der Kolbenstange (27) durch einen Anschlag (28) festgelegt ist, und dass die zweite Endlage durch einen weiteren Anschlag (32) gebildet ist, auf welchen ein Betätigungsknopf (31) aufstösst, mittels welchem die Kolbenstange (27) von der ersten Endlage entgegen einer durch eine Feder (30) wirkende Kraft in die zweite Endlage verschiebbar ist.

7. Vorrichtung nach Anspruch 5 oder 6, **dadurch gekennzeichnet, dass** die Durchgangsöffnung (26) durch eine Hülse (35) gebildet wird, die in einer erweiterten Ausnehmung (36) im Körperteil (9) in Längsachsenrichtung verschiebbar gehalten ist, und die mit einer flanschförmigen Verdickung (37) ausgestattet ist, die mittels einer Feder (38), die auf einem Einschraubteil (32), der in die erweiterte Ausnehmung (36) eingesetzt ist, abgestützt ist, gegen eine kragenförmige Verengung (39) in der erweiterten Ausnehmung (36) angedrückt wird, wobei zwischen flanschförmiger Verdickung (37) und kragenförmiger Verengung (39) ein dichtendes Element (40) eingesetzt ist.

8. Vorrichtung nach Anspruch 7, **dadurch gekennzeichnet, dass** in die Hülse (35) und in den Körperteil (9) Verbindungsbohrungen (34) als Ausströmdurchgänge angebracht sind.

9. Vorrichtung nach einem der Ansprüche 5 bis 8, **dadurch gekennzeichnet, dass** die durchgehende Bohrung (14) und die Durchgangsöffnung (26) nebeneinander und im wesentlichen parallel zueinander im Körperteil (9) angeordnet sind.

10. Vorrichtung nach einem der Ansprüche 1 bis 9, **dadurch gekennzeichnet, dass** der Behälter (2) die Form einer Flasche aufweist.

11. Vorrichtung nach Anspruch 10, **dadurch gekennzeichnet, dass** der Verschluss für die Flasche (2) als Verschraubdeckel (41) ausgebildet ist, der innenseitig eine ringförmige Kerbe (42) und einen daran anschliessenden kegelstumpfförmigen Bereich (43) aufweist, und dass die Mündung der Öffnung (4) der Flasche (2) einen ringförmigen Steg (44) und einen daran anschliessenden kegelstumpfförmigen Bereich (45) aufweist, wobei bei auf die Flasche (2) aufgeschraubten Verschraubdeckel (41) der ringförmige Steg (44) in die ringförmige Kerbe (42) eindringt und die beiden kegelstumpfförmigen Bereiche (43, 45) aufeinander zu liegen kommen.

12. Vorrichtung nach einem der Ansprüche 1 bis 11, **dadurch gekennzeichnet, dass** der Druckgasbehälter aus einer Druckgaskapsel (8) besteht, deren Gasinhalt im wesentlichen ausreichend ist, um die Flüssigkeitsmenge einer Behälterfüllung zu karbonisieren.

## Claims

1. Device (1) for carbonating a liquid which comprises a container (2) in which the liquid to be carbonated is contained, closable by means of a closure, a pressure-gas container (8) containing the gas and an adapter (7) for receiving the pressure-gas container (8) which is sealingly connectable to the container (2), and the pressure-gas contained in the pressure-bas container (8) is transferable into the container (2), and in which a coupling element (13) into which the pressure-gas container (8) is insertable and a safety fitting (25) are disposed, **characterized in that** means (24) are disposed in the adapter (7) for letting off the overpressure occurring in the container (2) after introduction of the gas, and that the safety fitting is arranged as a pressure-release valve (25) which is fixed in the adapter (7), by means of which the overpressure developing in the container upon filling is limitable.

2. Device according to claim 1, **characterized in that** the adapter (7) has a cover-like shape which consists of a body part (9) adjoined by a hollow cylindrical part (10) which is provided with an internal thread (11) which corresponds to an external thread (6) affixed to the container (2), and that a sealing element (12) is inserted in the hollow cylindrical part (10).

3. Device according to claim 2, **characterized in that** the coupling element (13) comprises a continuous bore (14) made on the body part (9) which opens out into the hollow cylindrical part (10) and which is provided with a narrow part (16) having a thread (17) into which a valve rod (18) is screwed.

4. Device according to claim 3, **characterized in that** the valve rod (18) has a blind bore (19) which is open towards the end averted from the hollow cylindrical part (10), and that in the zone of the valve rod (18) directed towards the hollow cylindrical part (10) at least one cross-bore (20) is made which opens out into the blind bore (19), and that placed over the zone of the valve rod (18) having the at least one cross-bore (20) is a sealing jacket (21) made of an elastic material which covers up the at least one cross-bore (20).

5. Device according to one of the claims 1 to 4, **characterized in that** the means (24) for letting off the overpressure occurring in the container (2) after the introduction of the gas is composed of a further through opening (26) made in the body part (9) and a piston rod (27) displaceable therein longitudinally, which piston rod (27) is provided with a seal (29) by means of which the through opening (26) is sealed tight in a first end position of the piston rod (27), whereas in a second end position the through opening (26) is opened.

6. Device according to claim 5, **characterized in that** the first end position of the piston rod (27) is determined by a stop (28), and that the second end position is formed by a further stop (32) against which a control button pushes, by means of which the piston rod (27) is displaceable from the first end position into the second end position against a force acting by a spring (30).

7. Device according to claim 5 or 6, **characterized in that** the through opening (26) is formed by a sleeve (35) which is longitudinally displaceably held in a broadened recess (36) in the body part (9) and which is equipped with a flange-shaped thickening (37) which, by means of a spring (38) which is supported on a threaded part (32) inserted into the broadened recess (36), is pressed against a collar-shaped narrowing (39) in the broadened recess (36), a sealing element (40) being inserted between flange-shaped thickening (37) and collar-shaped narrowing (39).

8. Device according to claim 7, **characterized in that** connecting bores (34) are made in the sleeve (35) and in the body part (9) as discharge passages.

9. Device according to one of the claims 5 to 8, **characterized in that** the continuous bore (14) and the through opening (26) are disposed side by side and substantially parallel to one another in the body part (9).

10. Device according to one of the claims 1 to 9, characterized in that the container (2) has the shape of a bottle.

11. Device according to claim 10, **characterized in that** the closure for the bottle (2) is designed as a screw cap (41) which has an annular notch (42) on the inside and an adjoining truncated conical zone (43), and that the mouth of the opening (4) of the bottle (2) has an annular flange (44) and an adjoining truncated conical zone (45), the annular flange (44) penetrating into the annular notch (42) when the screw cap (41) is screwed onto the bottle (2), and the two truncated conical zones (43, 45) coming to rest against one another.

12. Device according to one of the claims 1 to 11, **characterized in that** the pressure-gas container consists of a pressure-gas capsule (8), the gas content of which is substantially sufficient to carbonate the quantity of liquid of a container filling.

## Revendications

1. Dispositif (1) de carbonatation d'un liquide, comprenant un récipient (2) pouvant être fermé au moyen d'un bouchon et contenant le liquide à carbonater, un récipient (8) pour gaz sous pression et un adaptateur (7) destiné à recevoir le récipient (8) pour gaz sous pression et qui peut être relié au récipient (2) de manière étanche et où le gaz sous pression contenu dans le récipient (8) pour gaz sous pression peut être transféré dans le récipient (2), et dans lequel un élément d'accouplement (13), dans lequel le récipient (8) pour gaz sous pression peut être mis en place, et où est monté un dispositif de sécurité (25), **caractérisé en ce que** des moyens (24) d'échappement pour réduction de la surpression qui apparaît dans le récipient (2) après l'introduction du gaz sont montés dans l'adaptateur 7, et **en ce que** le dispositif de sécurité est réalisé sous la forme d'une soupape de surpression (25) qui est montée dans l'adaptateur (7) et au moyen de laquelle il est possible de limiter la surpression qui apparaît dans le récipient lors du remplissage.

2. Dispositif selon la première revendication, **caractérisé en ce que** l'adaptateur (7) est en forme de couvercle et comprend un corps (9) auquel se raccorde une partie cylindrique creuse (10) pourvue d'un filetage intérieur (11) qui correspond à un filetage extérieur (6) du récipient (2), et **en ce qu'**un joint (12) est placé dans la partie cylindrique creuse (10).

3. Dispositif selon la revendication 2, **caractérisé en ce que** l'élément d'accouplement (13) comprend dans le corps (9) un trou traversant (14) qui débouche dans la partie cylindrique creuse (10) et qui présente un rétrécissement (16) pourvu d'un filetage (17) dans lequel est vissée une tige de soupape (18).

4. Dispositif selon la revendication 3, **caractérisé en ce que** la tige de soupape (18) présente un trou borgne (19) ouvert du côté opposé à la partie cylindrique creuse (10), **en ce qu'**il y a dans la partie de la tige de soupape (18) située du côté de la partie cylindrique creuse (10) au moins un trou transversal (20) qui débouche dans le trou borgne (19), et **en ce qu'**une gaine d'étanchéité (21) faite d'une matière élastique est passée sur la partie de la tige de soupape (18) comportant au moins un trou transversal (20) et recouvre ce ou ces trous transversaux (20).

5. Dispositif selon l'une des revendications 1 à 4, **caractérisé en ce que** les moyens (24) permettant de réduire la surpression qui apparaît dans le récipient (2) après qu'on y a amené le gaz sont constitués par un autre trou traversant (26) pratiqué dans le corps (9) et une tige de piston (27) qui peut s'y déplacer longitudinalement, cette tige de piston (27) étant pourvue d'un joint (29) au moyen duquel le trou traversant (26) est fermé de manière étanche pour une première position extrême de la tige de piston (27), tandis que, dans une deuxième position extrême, le trou traversant (26) est ouvert.

6. Dispositif selon la revendication 5, **caractérisé en ce que** la première position extrême de la tige de piston (27) est déterminée par une butée (28) et que la deuxième position extrême est constituée par une deuxième butée (32) sur laquelle vient buter un bouton d'actionnement (31) au moyen duquel la tige de piston (27) peut être amenée de la première position extrême à la deuxième en surmontant la force antagoniste d'un ressort (30).

7. Dispositif selon la revendication 5 ou 6, **caractérisé en ce que** le trou traversant (26) est formé par un manchon (35) qui peut coulisser, dans la direction de l'axe longitudinal, dans une cavité élargie (36) du corps (9) et qui présente une partie élargie en forme de bride (37) qui est poussée par un ressort (38), qui s'appuie sur une pièce vissée (32) introduite dans la cavité élargie (36), contre un rétrécissement en forme d'arc de cercle (39) de la cavité élargie (36), un élément d'étanchéité (40) étant placé entre la partie élargie en forme de bride (37) et le rétrécissement en arc de cercle (39).

8. Dispositif selon la revendication 7, **caractérisé en ce que** des trous de liaison (34) servant de passages d'échappement sont pratiqués dans le manchon (35) et dans le corps (9).

9. Dispositif selon l'une des revendications 5 à 8, **caractérisé en ce que** le trou traversant (14) et l'ouverture traversante (26) se trouvent l'un à côté de l'autre, et sont sensiblement parallèles, dans le corps (9).

10. Dispositif selon l'une des revendications 1 à 9, **caractérisé en ce que** le récipient (2) a la forme d'une bouteille.

11. Dispositif selon la revendication 10, **caractérisé en ce que** le bouchon de la bouteille (2) est réalisé sous la forme d'un couvercle à visser (41) qui présente, du côté intérieur, une encoche annulaire (42) et une zone tronconique (43) qui s'y raccorde, et que l'embouchure (4) de la bouteille (2) présente un rebord annulaire (44) et une zone tronconique (45) qui s'y raccorde, le rebord annulaire (44) pénétrant dans l'encoche annulaire (42) et les deux zones tronconiques (43, 45) s'appliquant l'une sur l'autre quand le couvercle (41) est vissé sur la bouteille (2).

12. Dispositif selon l'une des revendications 1 à 11, **caractérisé en ce que** le réservoir de gaz sous pression est constitué par une cartouche de gaz sous pression (8) dont le contenu est sensiblement suffisant pour carbonater la quantité de liquide que peut contenir le récipient.
